# FASCICULE DE BREVET EUROPEEN

(11) **EP 3 138 166 B1**
(45) Date de publication et mention de la délivrance du brevet: **25.12.2019**
(21) Numéro de dépôt: 15721771.2
(22) Date de dépôt: 17.04.2015
(51) Int. Cl.: H02G 3/12, H02G 3/14, H02G 3/18

(54) **MODULE D'APPAREILLAGE ÉLECTRIQUE A ENCLIQUETER DANS UNE BOITE ÉLECTRIQUE**
ELEKTROMODUL ZUM EINSCHNAPPEN IN EINE ELEKTRODOSE
MODULE OF ELECTRICAL EQUIPMENT TO BE SNAP-FITTED INTO AN ELECTRICAL BOX

(30) Priorité: 28.04.2014 FR 1453831
(43) Date de publication de la demande: 08.03.2017
(73) Titulaire: Legrand France, 87000 Limoges (FR); Legrand SNC, 87000 Limoges (FR)
(72) Inventeur: MAZIERE, Laurent, F-87220 Feytiat (FR); CAILLE, Jean-Loup, F-87510 Peyrilhac (FR); LONGEVILLE, Jérôme, F-87350 Panazol (FR); CHAUMENY, Jean-Luc, 87590 Saint Just Le Martel (FR)
(74) Mandataire: Jacobacci Coralis Harle
(86) Numéro de dépôt international: PCT/FR2015/051047
(87) Numéro de publication internationale: WO 2015/166161

(56) Documents cités:
- EP-A2- 2 602 888
- DE-A1- 1 590 092
- DE-A1- 2 140 397
- DE-A1- 10 020 216
- DE-U- 7 030 837
- DE-U1- 9 106 123
- US-A- 2 934 590

## Description

### DOMAINE TECHNIQUE AUQUEL SE RAPPORTE L'INVENTION

La présente invention concerne de manière générale les appareillages électriques à engager dans des boîtes électriques qui sont par exemple encastrées dans des murs ou des plafonds.

Elle concerne plus particulièrement un module d'appareillage à engager dans une boîte électrique, comportant un boîtier en matériau isolant qui délimite un espace intérieur de réception d'un mécanisme électrique, et des moyens d'encliquetage qui sont adaptés à assurer la fixation du boîtier dans la boîte électrique et qui comprennent :
- une partie d'accrochage adaptée à s'accrocher à ladite boîte électrique,
- une patte qui porte ladite partie d'accrochage et qui est flexible entre une position de repos et une position déformée, et
- des moyens de manœuvre de ladite patte, qui sont accessibles à l'usager par l'avant dudit boîtier.

L'invention trouve une application particulièrement avantageuse dans la réalisation d'un module d'appareillage présentant par exemple une fonction d'interrupteur, de va-et-vient, de variateur électrique, de prise de courant, de prise réseau (RJ45), de prise de téléphone (RJ11), de prise VDI ou équivalent (HDMI,...), de voyant, de thermostat, ou encore de détecteur (de fumée, d'inondation, de température, de mouvement, de luminosité ou de lumière).

### ARRIERE-PLAN TECHNOLOGIQUE

Actuellement, les appareillages électriques présentent généralement des architectures similaires, avec un support d'appareillage en forme de cadre à rapporter à l'avant d'une boîte électrique, un mécanisme d'appareillage (par exemple un mécanisme d'interrupteur ou de prise de courant) à bloquer dans l'ouverture délimitée par le support d'appareillage, et une plaque de finition (ou « plaque d'habillage ») à fixer sur le support d'appareillage de telle manière qu'il cache ce dernier et qu'il borde esthétiquement le mécanisme d'appareillage.

Le mécanisme d'appareillage comporte en particulier un socle isolant qui loge des bornes de connexion pour sa connexion au réseau électrique local et qui est fermé à l'avant par un enjoliveur accessible à l'usager (une touche basculante ou enfonçable dans le cas d'un interrupteur ou d'un va-et-vient, un puits de branchement dans le cas d'une prise de courant, ...).

Ce socle isolant est généralement encliqueté, généralement de manière définitive, dans le support d'appareillage, tandis que le support d'appareillage est fixé sur la boîte électrique au moyen de vis dont les têtes s'appuient sur le support d'appareillage et dont les corps filetés sont vissés dans des puits de vissage prévus en correspondance dans la boîte électrique.

Par conséquent, lorsque l'usager souhaite remplacer le mécanisme d'appareillage par un mécanisme optimisé, il est forcé de dévisser les vis qui maintiennent le support d'appareillage sur la boîte électrique, de retirer ce support d'appareillage, de le remplacer par un autre support d'appareillage portant le nouveau mécanisme d'appareillage, puis de revisser les vis, ce qui s'avère fastidieux et onéreux.

On connaît également des mécanismes dont les socles isolants peuvent être dégagés des supports d'appareillage dans lesquels ils sont encliquetés. Toutefois, l'extraction du socle isolant nécessite l'utilisation d'un outil, si bien que cette opération reste fastidieuse.

On connaît par ailleurs du document DE9106123 un appareillage électrique comportant un module d'appareillage à loger dans une boîte électrique.

Tel qu'il apparaît dans ce document, le module d'appareillage comporte un socle flanqué de deux pattes flexibles qui s'étendent depuis le fond du socle vers l'avant et qui portent des dents d'encliquetage prévues pour s'accrocher à des fenêtres pratiquées dans la boîte électrique.

Les pattes flexibles sont par ailleurs chacune équipées d'un levier. Ce levier permet à l'usager de forcer, à l'aide d'un tournevis, la patte flexible à fléchir vers l'intérieur pour dégager sa dent d'encliquetage de la fenêtre pratiquée dans la boîte électrique.

Un inconvénient de ce module d'appareillage est que son extraction hors de la boîte électrique s'avère alors difficile à mettre en œuvre, notamment car elle requiert plusieurs outils.

En effet, pour dégager simultanément les deux pattes flexibles hors des fenêtres pratiquées dans la boîte électrique, l'usager doit, d'une part, utiliser deux tournevis pour faire fléchir simultanément les deux pattes flexibles, et, d'autre part, exercer un effort de traction sur le module d'appareillage pour l'extraire de la boîte électrique.

On connaît par ailleurs du document DE1590092 un appareillage électrique à engager dans une boîte électrique. Cet appareillage électrique comporte un mécanisme d'appareillage placé dans un support d'appareillage prévu pour se fixer à la boîte électrique au moyen de griffes.

Ces griffes sont portées par des languettes qui sont en partie accessibles à l'installateur de manière que celui-ci puisse déplacer les languettes entre deux positions, dont une position de repos et une position activée dans laquelle les griffes s'accrochent à la boîte électrique.

Dans cette solution, pour assurer une bonne tenue des languettes en position activée, il est nécessaire de prévoir des moyens de retenue très robustes. Il est par ailleurs nécessaire, pour éviter la sortie du module hors de la boîte, que les griffes soient bien accrochées à la boîte, ce qui demande pour l'installeur de fournir un effort très important pour placer les languettes en position activée.

On connaît aussi du document EP2602888 un appareillage électrique comportant un élément d'engagement à rapporter dans un élément de réception.

L'élément d'engagement comporte une plaque frontale en forme de cadre. Il comporte, à l'arrière de ce cadre, quatre languettes qui s'étendent à partir des quatre coins de la plaque frontale, et deux pattes qui s'étendent à partir de deux branches opposées de la plaque frontale. Les languettes portent des dents d'encliquetage à clipser sur l'élément de réception, lorsque les pattes portent des crans pour verrouiller la position angulaire de l'élément d'engagement par rapport à l'élément de réception.

Dans ce document, rien est prévu pour maintenir les dents d'encliquetage à distance de l'élément de réception.

Les documents DE10020216 et DE2140397 présentent d'autres formes d'appareillages électriques.

On connaît aussi du document US2934590 une boîte à rapporter dans une ouverture rectangulaire pratiquée dans une paroi. Cette boîte présente une forme parallélépipédique et comporte, dans deux faces opposées, des fentes. Elle est conçue pour recevoir un appareillage principal équipé de deux clips. Chaque clip est replié en U, avec un branche fixée au socle de l'appareillage et une branche opposée qui porte une languette prévue pour s'engager dans l'une des fentes précitées. Le fond de chaque clip présente une forme de diamant et est prévu pour recevoir l'extrémité d'un bras faisant saillie à l'arrière d'une plaque d'habillage.

### OBJET DE L'INVENTION

Afin de remédier aux inconvénients précités de l'état de la technique, la présente invention propose un module d'appareillage tel que défini dans la revendication 1.

Ainsi, grâce à l'invention, la patte peut être placée et maintenue dans l'une ou l'autre de deux positions stables : soit en position de repos, soit en position déformée.

Par ailleurs, selon l'invention, lorsque les pattes sont au repos, les dents d'encliquetage sont en position pour s'accrocher à la boîte électrique. Il est alors possible de facilement retirer le module d'appareillage hors de la boîte en forçant successivement les pattes à fléchir en position déformée (position dans laquelle elles sont bloquées par les moyens de retenue), puis en exerçant un effort de traction sur le module d'appareillage.

On comprend alors que l'usager peut extraire le module d'appareillage hors de la boîte électrique à l'aide d'une seule main.

L'invention concerne aussi un procédé d'extraction d'un module d'appareillage tel que précité hors d'une boîte électrique, tel que défini dans la revendication 6..

D'autres caractéristiques avantageuses et non limitatives du module d'appareillage conforme à l'invention sont définies dans les revendications 2 à 5.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective éclatée d'un module d'appareillage selon l'invention et d'une boîte électrique adaptée à recevoir ce module d'appareillage ;
- les figures 2, 3 et 4 sont respectivement des vues des détails II, III et IV de la figure 1 ;
- les figures 5 et 6 sont des vues en coupe d'une partie du module d'appareillage engagé dans la boîte électrique de la figure 1, sur lesquelles une patte du module d'appareillage est respectivement représentée en position déformée et en position de repos.

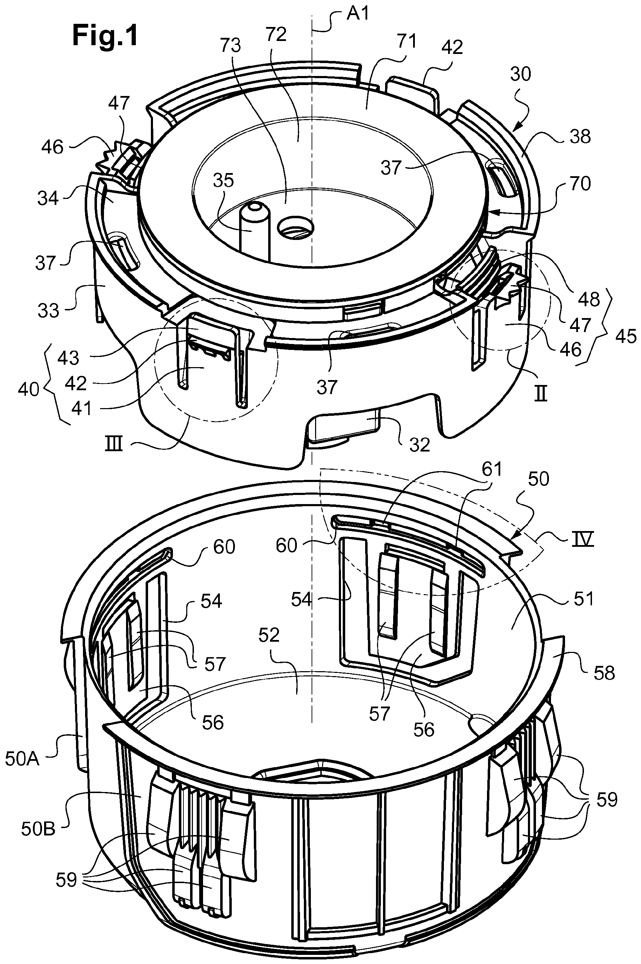

Sur la figure 1, on a représenté, d'une part, un module d'appareillage 30 qui comporte un enjoliveur 70, et, d'autre part, une boîte électrique 50 prévue pour recevoir le module d'appareillage 30 et pour être fixée à une paroi.

En l'espèce, cette boîte électrique 50 est du type à encastrer dans une cavité pratiquée dans une paroi. Cette paroi est ici formée par une cloison creuse.

On rappelle à ce sujet que, de manière connue, une telle cloison creuse est généralement composée d'une ossature métallique (formée de montants verticaux et de rails horizontaux non représentés) et de panneaux de plâtre rapportés sur l'une au moins des deux faces de l'ossature métallique.

La cavité pratiquée dans cette cloison creuse pour accueillir la boîte électrique 50 est alors simplement formée par une ouverture circulaire réalisée à la scie cloche dans l'un des panneaux de plâtre.

Dans la description, les termes « avant » et « arrière » seront utilisés par rapport à la direction du regard de l'installateur du module d'appareillage 30 dans le panneau de plâtre. Ainsi, les termes avant et arrière désigneront respectivement le lieu tourné vers l'extérieur de la cloison creuse et le lieu tourné vers l'intérieur de cette cloison creuse.

La boîte électrique 50 comprend ici une paroi latérale 51 fermée à l'arrière par une paroi de fond 52 pour délimiter un logement d'accueil du module d'appareillage 30.

Tel qu'il est représenté sur la figure 1, ce module d'appareillage 30 se présente sous la forme d'un bloc « tout en un », adapté à être rapporté directement dans la boîte électrique 50 (sans utiliser de support d'appareillage pour faire la jonction entre le module d'appareillage et la boîte électrique).

Le module d'appareillage 30 comporte un boîtier 31 en matériau isolant qui est prévu pour se loger entièrement dans ce logement d'accueil. Il comporte également au moins une plaque avant qui recouvre le boîtier de manière esthétique.

Ce boîtier 31 est plus précisément ici prévu pour être recouvert par deux plaques avant, dont un enjoliveur 70 central et une plaque d'habillage périphérique (non représentée).

Le module d'appareillage 30 est conçu pour offrir à l'utilisateur la fonction électrique souhaitée (prise de courant, interrupteur, ...).

Le boîtier 31 du module d'appareillage 30 comporte à cet effet une paroi latérale 33 délimitant un espace intérieur de réception d'un mécanisme électrique 32.

Le module d'appareillage 30 est par ailleurs équipé d'au moins un moyen d'encliquetage 40, 45 pour la fixation du boîtier 31 dans la boîte électrique 50.

On préfèrera que le module d'appareillage 30 comporte au moins une paire de moyens d'encliquetage 40, 45. Tel qu'il apparaît sur la figure 1, le module d'appareillage 30 en comporte deux paires.

Chacun de ces moyens d'encliquetage 40, 45 comprend une patte 41, 46 qui est flexible entre une position de repos et une position déformée (ici, cette position est déformée vers l'intérieur du boîtier).

Cette patte 41, 46 est ici découpée dans la paroi latérale 33 du boîtier 31 de telle manière qu'en position de repos, chaque patte 41, 46 s'étend dans le prolongement de la paroi latérale 33 du boîtier 31.

Chaque patte 41, 46 porte, du côté de son extrémité libre, une partie d'accrochage 42, 47 adaptée (ici, lorsqu'elle est en position de repos) à s'accrocher à la boîte électrique 50.

Chaque patte 41, 46 est par ailleurs équipée de moyens de manœuvre 43, 48 qui permettent à l'installateur de la déplacer en position déformée.

Selon une caractéristique particulièrement avantageuse de l'invention, le module d'appareillage 30 comporte des moyens de retenue 39 adaptés à retenir au moins l'une desdites pattes 41 en position déformée.

En pratique, ici, les moyens de retenue 39 permettent de retenir deux des quatre pattes 41 en position déformée.

La position déformée de chaque patte 41 étant située vers l'intérieur du boîtier 31 par rapport à la position de repos, ces moyens de retenue 39 permettent donc de retenir chaque patte 41 dans une position dans laquelle les parties d'accrochage 42 n'empêchent pas l'extraction du boîtier 31 hors de la boîte électrique 50.

De cette manière, lorsqu'il souhaite engager ou extraire le boîtier 31 dans ou hors de la boîte électrique 50, l'installateur peut bloquer ces deux pattes 41 en position déformée, puis manœuvrer facilement les deux autres pattes 46 afin de déplacer le boîtier 31.

Dans le mode de réalisation de l'invention représenté sur la figure 1, la paroi latérale 33 du boîtier 31 est cylindrique de révolution autour d'un axe A1. Elle est partiellement fermée à l'avant par une paroi frontale 34 plane (qui présente en son centre un dégagement pour accueillir l'enjoliveur 70). Elle est par ailleurs bordée à l'avant par un trottoir périphérique 38 prévu pour s'appuyer contre le bord avant de la boîte électrique 50.

La forme du boîtier 31 est conçue pour être semblable à celle du volume intérieur délimité par la boîte électrique 50. La forme de ce boîtier 31 permet ainsi de profiter de l'ensemble du volume intérieur délimité par la boîte électrique 50 pour loger des mécanismes électriques de toutes tailles.

Le mécanisme électrique 32 logé à l'intérieur du boîtier 31 comporte classiquement une partie fonctionnelle servant à assurer la fonction pour laquelle le module d'appareillage a été conçu, et une partie de connexion servant à assurer sa connexion électrique au réseau électrique local.

On entend par « partie fonctionnelle » une partie qui est adaptée à accomplir une fonction qui va au-delà d'une simple connexion à des conducteurs électriques (cette connexion étant réalisée par la « partie de connexion »).

La partie fonctionnelle présente une forme adaptée à la fonction que le mécanisme électrique doit exécuter.

Il pourra ainsi s'agir d'une fonction d'interaction avec l'installateur (typiquement d'une fonction de prise de courant, d'interrupteur, de va-et-vient, de variateur électrique, de prise VDI ou équivalent, de prise réseau, de prise de téléphone), ou d'une fonction d'interaction avec l'environnement (typiquement d'une fonction de voyant, de thermostat, de détecteur de fumée, de détecteur d'inondation, de détecteur de température, de détecteur de mouvement, de détecteur de lumière ou de luminosité...).

Il s'agit ici d'une fonction de prise de courant.

La partie fonctionnelle comporte alors une broche de terre 35, et deux alvéoles (non visibles) qui sont logées à l'intérieur du boîtier 31 et qui sont adaptées à recevoir deux broches d'une fiche électrique.

La partie de connexion pourra quant à elles comporter des bornes automatiques ou à vis, permettant de fixer et de connecter trois fils électriques issus du réseau électrique local aux broches de terre et alvéoles précitées.

L'enjoliveur 70 est alors adapté à être rapportée à l'avant du boîtier 31, dans le renfoncement prévu au centre de la paroi frontale 34 de ce boîtier 31, de façon à ce qu'il permette l'accès à la partie fonctionnelle du mécanisme électrique 32.

Cet enjoliveur 70 comporte ainsi une paroi avant 71 présentant un renfoncement en creux vers l'arrière qui délimite un puits d'insertion de la fiche électrique. Sa paroi avant 71 est ici plane et présente une forme annulaire. Le puits d'insertion est quant à lui plus précisément délimité par une paroi latérale 72 cylindrique de révolution autour de l'axe A1, qui est fermée à l'arrière par un fond 73 dans lequel sont prévues trois ouvertures pour le passage de la broche de terre 35 et le passage des broches de la fiche électrique.

Pour la fixation de l'enjoliveur 70 au boîtier 31 du module d'appareillage, la paroi latérale 72 de l'enjoliveur 70 porte extérieurement des dents d'encliquetage (non visibles) adaptées à s'accrocher au boîtier 31.

Comme le montre la figure 1, les pattes 41 des deux moyens d'encliquetage 40 du boîtier 31 dans la boîte électrique 50 sont ici situées de manière diamétralement opposée par rapport à l'axe A1, et s'étendent en longueur parallèlement à l'axe A1.

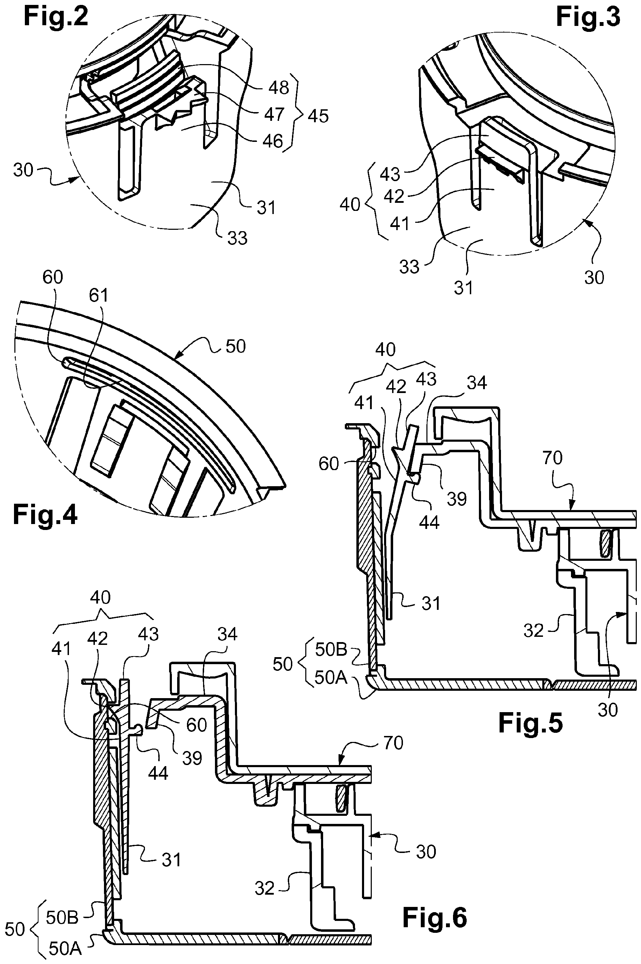

Comme le montre la figure 3, chaque patte 41 présente une forme de rectangle dont trois des bords sont libres et dont le quatrième bord, à savoir ici le bord arrière, se raccorde à la paroi latérale 33 du boîtier 31 pour former une sorte de charnière.

Comme cela a été mentionné supra, chaque patte 41 porte une partie d'accrochage 42 pour sa fixation à la boîte électrique 50.

Cette partie d'accrochage se présente ici sous la forme d'une dent de retenue 42 qui s'étend en longueur parallèlement au bord avant de la patte 41.

Chaque dent de retenue 42 présente une face avant plane et orthogonale à l'axe A1, qui est adaptée à s'accrocher à la boîte électrique 50, et une face arrière inclinée par rapport à l'axe A1, qui forme une rampe permettant à la patte 41 de se déformer élastiquement vers l'intérieur du boîtier 31 lorsque le module d'appareillage 30 est rapporté dans la boîte électrique 50.

Ici, les pattes 41 se prolongent au-delà de ces dents de retenue 42 et s'élèvent par-delà la paroi frontale 34 du boîtier 31, de manière que leurs extrémités libres avant 43 soient accessibles. De cette manière, ces extrémités libres avant 43 forment lesdits moyens de manœuvre, qui permettent à l'installateur de faire manuellement fléchir les pattes 41 vers l'intérieur du boîtier 31 pour extraire le module d'appareillage 30 hors de la boîte électrique 50.

Les moyens de retenue 39, qui permettent de retenir chaque patte 41 en position déformée, pourraient être situés sur l'enjoliveur 70 (par exemple à l'arrière de sa paroi avant 71) ou sur la plaque d'habillage.

Ici, comme le montrent les figures 5 et 6, ces moyens de retenue 39 sont situés sur le boîtier 31. Ils sont plus précisément formés d'une seule pièce avec le boîtier 31. Autrement formulé, le boîtier 31 étant moulé d'une seule pièce en matériau isolant (ici en ABS), ces moyens de retenue 39 sont formés au moment du moulage du boîtier 31.

Ces moyens de retenue 39 sont adaptés à coopérer par encliquetage avec les pattes 41.

En l'espèce, ces moyens de retenue comportent deux languettes 39 qui s'étendent à partir de la face arrière de la paroi frontale 34 du boîtier 31, vers l'arrière, respectivement en regard des deux pattes 41.

Chaque patte 41 comporte alors, en saillie de sa face intérieure, un crochet 44 qui vient automatiquement s'accrocher à la languette 39 correspondante du boîtier 31 lorsque l'installateur force cette patte 41 à fléchir jusqu'à sa position déformée.

Les crochets 44 et les languettes 39 sont conformés de telle manière qu'ils peuvent retenir les pattes 41 en position déformée mais que, si l'installateur exerce sur les pattes 41 un effort vers l'extérieur du boîtier 31, ils libèrent les pattes 41 de manière que celles-ci reviennent élastiquement en position de repos.

Les crochets 44 et les languettes 39 sont en outre conformés de manière à émettre un claquement au moment où ils s'accrochent ensemble, ce qui permet à l'installateur de contrôler qu'ils se sont bien accrochés.

Comme le montre la figure 1, les deux autres pattes 46 du boîtier 31 présentent des formes différentes de celles des pattes 41 décrites supra.

Ces pattes 46 sont plus précisément conçues pour permettre de bloquer en position angulaire autour de l'axe A1 le boîtier 31 par rapport à la boîte électrique 50.

Comme le montre la figure 1, ces deux pattes 46 sont situées de manière diamétralement opposée par rapport à l'axe A1, à égales distances des premières pattes 41, et elles s'étendent en longueur parallèlement à l'axe A1.

Comme le montre la figure 2, chaque patte 46 présente une forme de rectangle dont trois des bords sont libres et dont le quatrième bord, à savoir ici le bord arrière, se raccorde à la paroi latérale 33 du boîtier 31 pour former une sorte de charnière.

Comme cela a été mentionné supra, chaque patte 46 porte une partie d'accrochage pour sa fixation à la boîte électrique 50.

Ces parties d'accrochage sont formées par des crans 47, ici au nombre de trois par patte 46.

Ces crans 47 sont situés en saillie de la face extérieure de la patte 46 correspondante, côte-à-côte le long du bord avant de cette patte 46. Chaque cran 46 présente une forme saillante vers l'extérieur (ici triangulaire), avec deux bords latéraux droits en dièdre, une face avant plane et orthogonale à l'axe A1 et une face arrière inclinée par rapport à l'axe A1 (qui forme une rampe permettant à la patte 46 de se déformer élastiquement vers l'intérieur lorsque le module d'appareillage 30 est rapporté dans la boîte cylindrique 50).

Ici, les pattes 46 se prolongent au-delà de ces crans 47, vers l'intérieur du boîtier et vers l'avant, de manière que leurs extrémités libres avant 48 s'élèvent par-delà la paroi frontale 34 du boîtier 31 et soient facilement accessibles. De cette manière, ces extrémités libres avant 48 forment lesdits moyens de manœuvre, qui permettent à l'installateur de faire manuellement fléchir les pattes 46 vers l'intérieur du boîtier 31 pour faire pivoter le boîtier 31 dans la boîte électrique 50 ou pour extraire le boîtier 31 hors de la boîte électrique 50.

Sur la figure 1, on observe que la boîte électrique 50 est constituée d'un corps 50A réalisé dans un matériau plastique rigide (typiquement en polypropylène) et d'un revêtement 50B réalisé dans un matériau plus souple (typiquement en SEBS - acronyme anglais de «polystyrène-b-poly(éthylène-butylène)-b-polystyrène »).

La paroi latérale 51 du corps 50A de la boîte électrique 50 présente une forme cylindrique de révolution autour de l'axe A1.

Sur les figures 1 et 4, on observe que la boîte électrique 50 présente, pour la fixation du boîtier du module d'appareillage 30, quatre fenêtres 60 régulièrement réparties autour de l'axe A1.

Ces quatre fenêtres 60 sont identiques.

Elles présentent chacune une forme rectangulaire et elles s'étendent en longueur le long du bord avant de la paroi latérale 51 de la boîte électrique 50. Elles présentent une hauteur suffisante pour permettre l'engagement des dents de retenue 42 ou des crans 47 du boîtier 31 du module d'appareillage 30. Elles sont traversantes, en ce sens qu'elles débouchent de part et d'autre du corps 50A de la boîte électrique 50.

Comme le montre la figure 1, le revêtement 50B recouvre ici une grande partie de la face extérieure de la paroi latérale 51 du corps 50A de la boîte électrique 50, si bien qu'il ferme les fonds des quatre fenêtres 60.

Ce revêtement 50B est ici percé, au niveau de chaque fenêtre 60, de deux ouvertures 61 situées à distance l'une de l'autre.

Les dents de retenue 42 du boîtier 31 du module d'appareillage 30 sont adaptées à s'accrocher aux bords avant de deux des fenêtres 60 lorsque le trottoir périphérique 38 du boîtier 31 vient s'appuyer contre le bord avant de la paroi latérale 51 de la boîte électrique 50, ce qui permet de bloquer le module d'appareillage 30 axialement (selon l'axe A1).

Ici, les crans 47 du module d'appareillage 30 sont également adaptés à s'accrocher aux bords avant des deux fenêtres 60 lorsque le trottoir périphérique 38 du boîtier 31 vient s'appuyer contre le bord avant de la paroi latérale 51 de la boîte électrique 50, ce qui leur permet de participer au blocage axial du module d'appareillage 30 dans la boîte électrique 50.

Les dents de retenue 42 et les crans 47 s'étendent ici sur toute la largeur des pattes 41, 46 qui les portent. Les largeurs de ces pattes 41, 46 sont strictement inférieures aux longueurs des fenêtres 60. Par conséquent, une fois les dents de retenue 42 et les crans 47 accrochés aux bords avant des fenêtres 60, le module d'appareillage 30 reste libre de pivoter dans la boîte électrique 50 autour de l'axe A1.

Bien entendu, ce pivotement est borné entre deux positions angulaires extrêmes dans lesquelles les bords des dents de retenue 42 viennent au contact de l'une ou l'autre des extrémités des fenêtres 60 correspondantes.

Pour bloquer cette mobilité de pivotement, les crans 47 viennent coopérer avec la partie du revêtement 50B qui ferme le fond des fenêtres 60 auxquelles s'accrochent les crans 47.

Pour assurer une coopération efficace de ces crans 47 avec le revêtement 50B, on peut prévoir des butées (non représentées et venant par exemple venir de formation avec la plaque d'habillage) pour forcer les pattes 46 à fléchir vers l'extérieur, de telle manière que les crans 47 viennent s'ancrer dans (voire percer) le revêtement 50B. L'utilisation de ces butées sera décrite plus en détail dans la suite de cet exposé.

Pour sa fixation dans l'ouverture circulaire pratiquée dans le panneau de plâtre, la boîte électrique 50 comporte un trottoir extérieur 58 qui longe extérieurement le bord de l'ouverture avant de sa paroi latérale 51 et qui est adapté à prendre appui contre la face avant du panneau de plâtre, tout autour de l'ouverture circulaire qui y est pratiquée. Ainsi, ce trottoir extérieur 58 permet de bloquer la boîte électrique 50 vers l'arrière.

Pour son blocage vers l'avant, la boîte électrique 50 pourrait être équipée de deux griffes qui interviendraient en position diamétralement opposée et qui, sous le contrôle de vis, seraient aptes à venir s'accrocher à la face arrière du panneau de plâtre.

Ici, comme le montre la figure 1, la paroi latérale 53 de la boîte électrique 50 comporte plutôt quatre volets 56 globalement rectangulaires qui sont découpés dans des ouvertures 54 pratiquées dans la paroi latérale 51 et qui sont régulièrement répartis autour de l'axe A1. Chaque volet 56 présente trois bords libres et un quatrième bord, à savoir ici le bord avant, qui se raccorde au reste de la paroi latérale 51 par deux pattes formant charnière.

Les volets 56 sont ainsi libres de pivoter au travers des ouvertures 54, entre une position rentrée et une position sortie.

Au repos, les volets 56 sont en position rentrée, c'est-à-dire que leurs faces externes sont situées dans le prolongement de la face externe du reste de la paroi latérale 51 du corps 50A de la boîte électrique 50. Ces volets ne gênent donc pas l'engagement de la boîte électrique au travers de l'ouverture circulaire pratiquée dans le panneau de plâtre.

Ces quatre volets 56 comportent chacun, en saillie sur leurs faces intérieures, deux nervures parallèles 57 qui forment des rampes d'axes parallèles à l'axe A1. Ainsi, lorsque le module d'appareillage 30 est rapporté dans la boîte électrique 50 selon l'axe A1, son boîtier 31 appuie contre ces nervures parallèles 57, ce qui permet de forcer les volets 56 à se déployer en position sortie, c'est-à-dire en saillie de la face externe de la paroi latérale 51 du corps 50A de la boîte électrique 50.

Ici, le revêtement 50B recouvre notamment les volets 56 de manière à obturer les ouvertures 54. Il présente, au niveau de chacun des volets 56, des nervures 59 parallèles à l'axe A1, en saillie sur sa face externe.

De cette manière, lorsqu'ils se déploient, les volets 56 compriment les nervures 59 du revêtement 50B contre le bord de l'ouverture circulaire pratiquée dans le panneau de plâtre, ce qui permet de fixer la boîte électrique 50 dans cette ouverture circulaire.

La plaque d'habillage (non représentée) est pour sa part adaptée à être rapportée à l'avant du boîtier 31, autour de l'enjoliveur 70, à des fins esthétiques et de protection électrique.

Pour sa fixation à l'avant du module d'appareillage 30, la plaque d'habillage comporte quatre pattes crantées qui s'étendent à partir de sa face arrière, vers l'arrière.

En correspondance, comme le montre la figure 1, la paroi frontale 34 du boîtier 31 présente quatre fentes 37 régulièrement réparties autour de l'axe A1, au travers desquelles les pattes crantées de la plaque d'habillage peuvent s'engager et s'accrocher à la hauteur souhaitée.

L'installation du module d'appareillage 30 dans l'ouverture circulaire pratiquée dans le panneau de plâtre de la cloison creuse est alors réalisée de la manière suivante.

L'installateur rapporte tout d'abord la boîte électrique 50 dans l'ouverture circulaire, en prenant soin que son trottoir extérieur 58 s'applique bien contre le panneau de plâtre.

L'installateur rapporte ensuite le module d'appareillage 30 dans la boîte électrique 50, en prenant soin que son trottoir périphérique 38 s'applique bien contre le trottoir extérieur 58 de la boîte électrique 50.

Le module d'appareillage 30 étant livré dans une configuration où ses pattes 41 sont retenues en position déformée (voir figure 5), les dents de retenue 42 ne forment pas obstacle à cet engagement.

Lors de cet engagement, les volets 56 de la boîte électrique 50 sont repoussés vers l'extérieur par le boîtier 31, de manière que la boîte électrique 50 est alors rigidement fixée au panneau de plâtre.

Une fois le module d'appareillage 30 engagé dans la boîte électrique 50, les crans 47 du boîtier 31 s'accrochent automatiquement aux fenêtres 60 de la boîte électrique 50, ce qui permet de retenir axialement le module d'appareillage 30 dans la boîte électrique 50.

En l'absence de la plaque d'habillage, les crans 47 sont simplement en appui contre le revêtement 50B de la boîte électrique 50, si bien qu'ils bloquent faiblement le module d'appareillage 30 en position angulaire dans la boîte électrique 50.

Pour régler la position angulaire du module d'appareillage 30 dans la boîte électrique 50 autour de l'axe A1 (afin notamment d'orienter le module d'appareillage 30 à l'aplomb de la verticale de la cloison creuse), l'installateur peut forcer le module d'appareillage à pivoter. Il peut sinon manœuvrer les extrémités libres avant 48 des pattes 46 de manière à écarter les crans 47 du revêtement 50B, avant de faire pivoter plus facilement le module d'appareillage 30.

L'installateur force ensuite les pattes 41 à revenir en position de repos, de manière que les dents de retenue 42 s'accrochent également aux bords des fenêtres 60 de la boîte électrique 50, ce qui améliore le blocage axial du module d'appareillage 30 dans la boîte électrique 50 (voir figure 6).

Enfin, l'installateur rapporte la plaque d'habillage à l'avant du boîtier 31, de telle manière que ses pattes crantées s'accrochent aux fentes 37 prévues dans la paroi frontale 34 du boîtier 31.

Dans cette position, les extrémités libres avant 43, 48 des pattes 41, 46 sont cachées et ne sont plus accessibles.

Dans cette position également, les butées éventuellement prévues à l'arrière de la plaque d'habillage repoussent les pattes 46 vers l'extérieur, de manière que les crans 47 s'ancrent solidement dans le revêtement 50B de la boîte électrique 50 (ce qui assure un blocage angulaire efficace du module d'appareillage 30 dans la boîte électrique 50).

Pour extraire le module d'appareillage 30 hors de la boîte électrique 50, l'installateur procède de la manière suivante.

Il commence par retirer la plaque d'habillage, de manière à découvrir les extrémités libres avant 43, 48 des pattes 41, 46 du boîtier 31 et à libérer les crans 47.

Il manœuvre ensuite les extrémités libres avant 43 des pattes 41 afin de forcer ces dernières à fléchir en position déformée, de façon à ce que leurs crochets 44 s'accrochent aux languettes 39 du boîtier 31 (voir figure 5).

A l'aide d'une seule main, l'installateur peut ensuite pincer les extrémités libres avant 48 des pattes 46, de manière à extraire les crans 47 des fenêtres 60 de la boîte électrique 50, ce qui permet de retirer le module d'appareillage 30 hors de la boîte électrique 50.

La présente invention n'est nullement limitée au mode de réalisation décrit et représenté, mais l'homme du métier saura y apporter toute variante conforme à son esprit.

On pourrait ainsi prévoir d'équiper toutes les pattes (41, 46) du module d'appareillage avec des crochets, de manière à ce que l'installateur puisse bloquer toutes ces pattes en position déformée.

Selon une autre variante de l'invention non représentée sur les figures, on aurait pu prévoir de mouler le boîtier du module d'appareillage de telle manière qu'au repos, les pattes (41) soient inclinées vers l'intérieur du boîtier. Dans cette variante, les moyens de retenue seraient alors conçus pour retenir les pattes en position droite (dans le prolongement de la paroi latérale du boîtier). Autrement formulé, au repos, les dents des pattes ne pourraient pas s'accrocher à la boîte électrique. Il faudrait alors faire fléchir les pattes vers l'extérieur, en position droite (position dans laquelle elles sont retenues), afin que les dents des pattes puissent s'accrocher aux fenêtres de la boîte électrique.

Selon une autre variante de l'invention non représentée sur les figures, on aurait pu prévoir que les moyens de retenue soient formés par des griffes d'encliquetage venant de formation avec le boîtier, auquel cas ces griffes d'encliquetage seraient adaptées à accrocher les pattes (41) par leurs tranches ou par leurs extrémités libres.

Selon une autre variante de l'invention, on aurait pu prévoir que les moyens de retenue ne viennent pas de formation avec le boîtier, et qu'ils soient montés mobile sur le boîtier. Chaque moyen de retenue pourrait alors se présenter sous la forme d'un loquet monté mobile en translation ou en rotation sur le boîtier, entre une première position dans laquelle il laisserait la patte libre de ses mouvements et une seconde position dans laquelle il retiendrait la patte en position déformée.

## Revendications

1. Module d'appareillage (30) à engager dans une boîte électrique (50), comportant :
- un boîtier (31) en matériau isolant qui délimite un espace intérieur de réception d'un mécanisme électrique (32),
- une plaque avant à rapporter à l'avant dudit boîtier (31), et
- au moins un moyen d'encliquetage (40) pour la fixation du boîtier (31) dans la boîte électrique (50), qui comprend :
• une partie d'accrochage (42) adaptée à s'accrocher à ladite boîte électrique (50),
• une patte (41) qui porte ladite partie d'accrochage (42) et qui est flexible entre une position de repos et une position déformée, la position de repos de la patte (41) étant située vers l'extérieur du boîtier (31) par rapport à la position déformée, et
• des moyens de manœuvre (43) de ladite patte (41) pour la déplacer en position déformée,
**caractérisé en ce que** le module d'appareillage comporte des moyens de retenue (39) qui viennent de formation d'une seule pièce avec le boîtier (31) ou avec la plaque avant, et qui sont adaptés à coopérer par encliquetage avec ladite patte (41) pour la retenir en position déformée.

2. Module d'appareillage (30) selon la revendication précédente, dans lequel lesdits moyens de retenue comportent une languette (39) à laquelle est adapté à se clipser un crochet (44) qui s'étend en saillie de l'une des faces de ladite patte (41).

3. Module d'appareillage (30) selon l'une des revendications précédentes, dans lequel lesdits moyens de manœuvre (43) sont accessibles à l'usager par l'avant dudit boîtier (31).

4. Module d'appareillage (30) selon l'une des revendications précédentes, dans lequel il est prévu au moins deux moyens d'encliquetage (40), qui sont régulièrement répartis sur le pourtour du boîtier (31).

5. Module d'appareillage selon l'une des revendications précédentes, dans lequel la partie d'accrochage de l'un au moins des moyens d'encliquetage comporte des moyens de blocage angulaire du boîtier dans ladite boîte électrique.

6. Procédé d'extraction d'un module d'appareillage (30) selon l'une des revendications précédentes, hors d'une boîte électrique (50), comportant des étapes consistant à :
- manœuvrer les moyens de manœuvre (43) de chaque patte (41) pour déplacer chaque patte (41) en position déformée, de manière que les moyens de retenue (39) retiennent chaque patte (41) en position déformée, puis
- tirer le boîtier (31) hors de la boîte électrique (50).

## Patentansprüche

1. Elektromodul (30) zum Einschnappen in eine Elektrodose (50) mit
- einem Gehäuse (31) aus isolierendem Material, das einen inneren Raum zum Aufnehmen eines elektrischen Mechanismus (32) begrenzt,
- einer vorderen Platte, die auf der Vorderseite des Gehäuses (31) anzubringen ist, und
- wenigstens einem Einschnappmittel (40) zum Befestigen des Gehäuses (31) in der Elektrodose (50), das
. einen Einhakteil (42), der dazu ausgelegt ist, sich an der Elektrodose (50) einzuhaken,
. eine Lasche (41), die den Einhakteil (42) trägt und die zwischen einer Ruheposition und einer verformten Position flexibel ist, wobei die Ruheposition der Lasche (41) in Bezug auf die verformte Position zum Äußeren des Gehäuses (31) hin liegt, und
. Mittel (43) zum Betätigen der Lasche (41), um diese in die verformte Position zu bringen,
aufweist,
**dadurch gekennzeichnet, daß** das Elektromodul Rückhaltemittel (39) aufweist, die mit dem Gehäuse (31) oder mit der vorderen Platte einstückig ausgebildet sind und die dazu ausgelegt sind, durch Einschnappen mit der Lasche (41) zusammenzuwirken, um sie in der verformten Position zu bewahren.

2. Elektromodul (30) gemäß dem vorangehenden Anspruch, bei dem die Rückhaltemittel eine Zunge (39) aufweisen, an der ein Haken (44) einschnappen soll, der sich auf einer der Frontseiten der Lasche (41) hervorstehend erstreckt.

3. Elektromodul (30) gemäß einem der vorangehenden Ansprüche, bei dem die Betätigungsmittel (43) für den Benutzer von der Vorderseite des Gehäuses (31) her zugänglich sind.

4. Elektromodul (30) gemäß einem der vorangehenden Ansprüche, bei dem wenigstens zwei Einschnappmittel (40) vorgesehen sind, die über den Umfang des Gehäuses (31) gleichmäßig verteilt sind.

5. Elektromodul (30) gemäß einem der vorangehenden Ansprüche, bei dem der Einhakteil wenigstens eines der Einschnappmittel Mittel zum winkelmäßigen Blockieren des Gehäuses in der Elektrodose aufweist.

6. Verfahren zum Herausnehmen eines Elektromoduls (30) gemäß einem der vorangehenden Ansprüche aus einem elektrischen Gehäuse (50), mit Schritten, die darin bestehen,
- die Mittel (43) zum Betätigen jeder Lasche (41) zu betätigen, um jede Lasche (41) in die verformte Position zu bringen, damit die Rückhaltemittel (39) jede Lasche (41) in der verformten Position zurückhalten, dann
- das Gehäuse (31) aus der Elektrodose (50) herauszuziehen.

## Claims

1. Module of equipment (30) to be fitted into an electrical box (50), comprising:
- a housing (31) made of insulating material which delimits an internal space for receiving an electrical mechanism (32),
- a front plate to be affixed to the front of said housing (31), and
- at least one snap-fitting means (40) for securing the housing (31) in the electrical box (50), which comprises:
• a latching part (42) designed to latch onto said electrical box (50),
• a tab (41) which bears said latching part (42) and which is flexible between a rest position and a deformed position, the rest position of the tab (41) being located outwards with respect to the housing (31) compared to the deformed position, and
• means (43) for manoeuvring said tab (41) in order to move it into the deformed position,
**characterized in that** the module of equipment comprises retention means (39) which are formed in one piece with the housing (31) or with the front plate, and which are designed to engage by snap-fitting with said tab (41) so as to retain the latter in the deformed position.

2. Module of equipment (30) according to the preceding claim, in which said retention means comprise a tongue (39) onto which a hook (44), that projects from one of the faces of said tab (41), is designed to clip.

3. Module of equipment (30) according to one of the preceding claims, in which said manoeuvring means (43) are accessible to the user via the front of said housing (31).

4. Module of equipment (30) according to one of the preceding claims, in which there are provided at least two snap-fitting means (40), which are regularly distributed around the perimeter of the housing (31).

5. Module of equipment according to one of the preceding claims, in which the latching part of the at least one of the snap-fitting means comprises means for the angular immobilizing of the housing in said electrical box.

6. Method for removing a module of equipment (30) according to one of the preceding claims, from an electrical box (50), comprising steps of:
- manoeuvring the manoeuvring means (43) of each tab (41) so as to move each tab (41) into the deformed position such that the retention means (39) retain each tab (41) in the deformed position, then
- pulling the housing (31) out of the electrical box (50).
